# EUROPÄISCHE PATENTSCHRIFT

(11) **EP 1 896 264 B1**
(45) Veröffentlichungstag und Bekanntmachung des Hinweises auf die Patenterteilung: **31.03.2010**
(21) Anmeldenummer: 06753985.8
(22) Anmeldetag: 30.05.2006
(51) Int. Cl.: B41M 3/12, B44C 1/17, C04B 41/89

(54) **VERFAHREN ZUR HERSTELLUNG KERAMISCHER SCHICHTEN IM OFFSETDRUCKVERFAHREN**
METHOD FOR MANUFACTURING CERAMIC LAYERS IN THE OFFSET PRINTING PROCESS
PROCEDE DE PRODUCTION DE COUCHES CERAMIQUES EN PROCEDE D'IMPRESSION OFFSET

(30) Priorität: 06.06.2005 DE 102005025920
(43) Veröffentlichungstag der Anmeldung: 12.03.2008
(73) Patentinhaber: Leipold, Herbert, 90513 Zirndorf (DE)
(72) Erfinder: Leipold, Herbert, 90513 Zirndorf (DE)
(74) Vertreter: Schwarzensteiner, Marie-Luise
(86) Internationale Anmeldenummer: PCT/EP2006/005152
(87) Internationale Veröffentlichungsnummer: WO 2006/131239

(56) Entgegenhaltungen:
- DE-A1- 2 353 902
- DE-A1- 4 424 459

## Beschreibung

Die vorliegende Erfindung betrifft ein Verfahren zur Herstellung keramischer Schichten in einem Offsetdruckverfahren.

Offsetdruckverfahren sind seit langem im Stand der Technik bekannt. Üblicherweise werden organische Pigmentfarbstoffe ein- oder mehrfarbig unter Wasserfeuchtung der Druckplatte gedruckt. Seit den 1960-er Jahren gewann der Trockenoffsetdruck zunehmend an Bedeutung. Dabei wird unter Verwendung spezieller Farben wasserlos ein- oder mehrfarbig gedruckt.

In der EP 719 221 B1 ist in diesem Zusammenhang ein Verfahren zur Erzeugung keramischer Abziehbilder, bei dem der erste Farbdruck unmittelbar auf das Trägerpapier aufgetragen wird, beschrieben. Das Druckmedium ist eine Anpastung aus hochbenetzendem Firnis, Farbkörper und Flußmittel oder keramischer Farbe. Ähnliche Verfahren sind in dem US-PSen 5,132,165 und 3,898,362 beschrieben. Sie unterscheiden sich von dem zuerst genannten Verfahren im Wesentlichen durch das verwendete Druckmedium, aber auch dadurch, dass vor dem Aufbringen eines ersten Farbdruckes eine Schicht aus einem Flußmittel erzeugt wird. Die DE-OS 23 53 902 offenbart ein Ve-rfahren zur Herstellung eines keramischen Abziehbildes, bei dem in OffsetDruckverfahren mehrere keramische Schichten auf ein Substrat aufgebracht werden. Zwischen jedem Farbauftrag wird ein Trockenschritt durchgeführt.

Gemeinsamer Nachteil dieser Verfahren ist, dass zwischen den einzelnen Schritten des Aufbringens der Farbschicht langwierige Trockenschritte erforderlich sind, welche einen erheblichen Kosten und Zeitfaktor für das Gesamtverfahren darstellen. Auch sind durch die zwischengeschalteten Trockenschritte die erzielbaren Farbräume und damit die Bildqualität zumindest eingeschränkt. Weiterhin verändert Papier bei Zwischenschaltung von Trockenschritten seine ursprünglichen Dimensionen, wodurch ein passergenaues Drucken erheblich erschwert wird. Ein weiterer Nachteil der vorgenannten Verfahren ist, dass in die Farbmittel Flussmittel eingearbeitet sind, was die erzielbare Farbintensität negativ beeinflussen kann.

Der Erfindung liegt die Aufgabe zugrunde, die bekannten Verfahren in diesem Punkt zu vereinfachen, d.h. schneller zu machen, wobei wiederum gleichzeitig eine im Hinblick auf die erzielbaren Farbräume verbesserte Bildqualität und Wiedergabequalität erzielbar sein soll.

Gegenstand der vorliegenden Erfindung ist damit ein Verfahren zur Herstellung keramischer Schichten in einem herkömmlichen Offsetdruckverfahren, das sich dadurch auszeichnet, dass ohne Zwischenschaltung von Trockenschritten nacheinander in einem einzigen Druckdurchgang wenigstens zwei Keramikschichten nass-in-nass auf einem Träger erzeugt werden.

Das erfindungsgemäße Verfahren kann sowohl unter Feuchtung der Druckplatte als auch mit wasserlosen Drucksystemen durchgeführt werden.

Bei dem erfindungsgemäßen Verfahren kann ein Farbmittel, bestehend aus wenigstens einem bei hohen Temperaturen kalzinierten anorganischen Oxid und einem wenigstens ein- oder zweikomponentigen Firnis, wobei die Mischung anorganisches Oxid/Firnis eine Endviskosität von 200 Pa.s bis 1.000 Pa.s aufweist, eingesetzt werden.

Das anorganische Oxid ist dabei in einem Verhältnis von 30 bis 60 Gew% in den Firnis eingearbeitet. Der Firnis ist vom oxidativ trocknenden Typ oder auch ein strahlungstrocknender Firnis. Eine Trocknung der fertig bedruckten Bahnen unter beispielsweise UV-Licht, erhöht die Herstellungsgeschwindigkeit beträchtlich und trägt damit wieder zur Kostenreduktion bei.

Ein Drucken nass-in-nass, also ohne Zwischenschaltung von Trockenschritten, ist bisher im Stand der Technik nicht beschrieben und wird auch nicht angewendet. Damit lassen sich Mehrfarbendrucke mit großer Druckgeschwindigkeit von mindestens 5.000 Bg/St erzeugen. Durch die nass-in-nass Technik lässt sich die Bildqualität bei verbessertem Farbraum und verbesserter Wiedergabequalität erhöhen.

Bei dem erfindungsgemäßen Verfahren werden bei hoher Temperatur erzeugte anorganische Oxide zur Erzeugung der Keramikschicht verwendet. Bildqualität und Farbraum lassen sich dann besonders gut optimieren.

Es wird angenommen, dass dieser Effekt durch die Auswahl der speziellen anorganischen Oxide erzielt werden kann, da durch die Kalzinierung bei hohen Temperaturen von wenigstens 1.000 °C eine einheitliche kristalline Struktur der anorganischen Oxide vorgegeben ist. Diese Eigenschaft dürfte zum einen deren Farbintensität im gebrannten Zustand sowie deren Dispergierverhalten in einem auszuwählenden Trägermedium hinsichtlich der Verteilung der Feststoffe und der Fließfähigkeit des Druckmediums (anorganisches Oxid + Trägermedium) beeinflussen.

Es werden bei hoher Temperatur kalzinierte anorganische Oxide mit einer Korngrößenverteilung D50 im Bereich von 0,8 µm bis 6 µm verwendet. Bevorzugt werden solche bei hoher Temperatur kalzinierten anorganischen Oxide mit einer Korngrößenverteilung D50 im Bereich von 1 µm bis 3 µm eingesetzt.

Mit einer solchen Korngrößenverteilung und solchen Korngrößen lassen sich in dem Trägermedium die anorganischen Oxide stabil und gleichförmig dispergieren.

Im Rahmen der vorliegenden Erfindung werden die anorganischen Oxide aus der Gruppe der anorganischen Farbpigmente, insbesondere der verschiedenen bekannten farbgebenden Metalloxide ausgewählt. Jede zu erzeugende Keramikschicht wird aus wenigstens einem anorganischen Oxid erzeugt. Mischungen verschieden farbiger Oxide zur Erhöhung der Farbpalette sind bereits hier möglich. Üblicherweise werden jedoch Farbzwischentöne bzw. Mischfarben durch das präzise aufeinander folgende nass-in-nass Drucken verschiedenfarbiger Druckmedien (Farben) und deren Rasterung erzeugt.

Erfindungsgemäß können auch Gläser, insbesondere Silikatgläser, insbesondere feinste Glaskügelchen, welche dann bevorzugt mit Metallfilmen beschichtet sein können oder nicht, verwendet werden. Denkbar sind hier Beschichtungen mit gold-, silber-, palladium- oder messingfarbenen Legierungen oder diesen entsprechenden Edelmetallen bzw. Legierungen selbst. Diese Farbtöne lassen sich ansonsten im Offsetdruck nur schwierig verwirklichen. Auf diese Weise lassen sich besonders edle Effekte erzielen.

Im Rahmen der vorliegenden Erfindung lassen sich besondere Glanzeffekte auf einem zu dekorierenden Untergrund erhalten, indem man dem Firnis geeignete Metall- oder Edelmetallzusätze beifügt. Besonders geeignet hiefür sind Gold, Silber, Platin, Palladium, Rhodium, Ruthenium, Osmium, Iridium und Verbindungen daraus. Alle anorganischen Materialien, die einen Sinterprozess bei Temperaturen beginnend ab 300°C bis zu Temperaturen oder 1350°C standhalten, können so mit einer entsprechend gewünschten metallischen Schicht überzogen werden. Die anorganischen Materialien können, aber müssen nicht Farbpigmente bzw. farbige Materialien sein. Die einzigartigen Glanzeffekte entstehen im ersten Fall nach dem Auftrag des die anorganischen Partikel und die Metallkomponente enthaltenden Bindemittels beim Einbrenn-/Sinterprozess. Beim Verdampfen der organischen Bestandteile legt sich das Metall auf die ungeschmolzenen anorganischen Partikel oder im zweiten Fall auf eine entsprechende Unterlage (zwischen 100°C und 300°C) und verschmilzt mit diesen bei höheren Temperaturen beim Erreichen des Erweichungspunktes. Es lassen sich damit besondere Dekor- und Farbeffekte erzielen, oder bezüglich Form und Widerstand definierte, leitfähige Schichten ausbilden.

In bevorzugter Weise wird jede einzelne Keramikschicht bzw. Pigmentschicht nass in einer Dicke aufgetragen, so dass sie im Trockenzustand (im gebrannten Zustand) in einer dünnen Schicht von 0,5 µm bis 3,5 µm auf einem keramischen Träger vorliegt. Die Möglichkeit der Einhaltung dieser geringen Schichtdicke ist wieder durch die Auswahl der spezifischen anorganischen Oxide bedingt, welche aufgrund ihrer einheitlichen kristallinen Struktur und den damit verbundenen und optimierten Sintereigenschaften besondere Farbeigenschaften bzw. eine besonders intensive Färbung bereits durch den Auftrag geringster Mengen ermöglichen. Durch den Auftrag weiterer unterschiedlich gefärbter und aufeinander abgestimmter Keramikschichten lässt sich im Hinblick auf die Bildqualität ein überraschend großer Farbraum erzielen.

Als Trägermedium dient erfindungsgemäß ein Firnis, basierend auf oxidativ oder strahlungstrocknenden Polymeren, in dem die anorganischen Oxide aufgenommen sind. Der Firnis ist vorzugsweise ein- oder zweikomponentig, kann aber auch mehrkomponentig sein und ist im Hinblick auf die Endverwendung der keramischen Schichten im Wesentlichen rückstandslos veraschbar. Er basiert bevorzugt im Wesentlichen auf nicht-umgesetztem Leinöl und ist im Wesentlichen frei von Acrylaten.

Wesentliche Kriterien des zu verwendenden Firnis sind dessen Viskosität, welche bei 25 °C zwischen 10 bis 18 Pa.s, bevorzugt jedoch 15 Pa.s betragen sollte. Diese Viskosität ist im Hinblick auf den Tackwert und damit die Verarbeitbarkeit des Farbmittels (anorganisches Oxid + Trägermedium) wichtig.

Im Rahmen der vorliegenden Erfindung kann beispielsweise ein auf Leinöl basierendes, mit Kolophonium modifiziertes, oxidativ trocknendes Alkydharz als Firnis verwendet werden. Dieses wird gegebenenfalls mit einem Lösemittel verdünnt.

Gegebenenfalls kann dem Farbmittel ein Dispergiermittel, das keinen weiteren Beschränkungen unterliegt, zur Einstellung von Viskosität und Tackwert zugegeben werden. Die Menge an zugzugebendem Dispergiermittel liegt bei 0,1% bis 2%, vorzugsweise 0,5 bis 2 Gew.%, bezogen auf den Firnis.

Vorzugsweise liegt die Endviskosität des Druckmediums, bestehend aus anorganischem Oxid in Firnis/Dispergiermittel zwischen 200 Pa.s bis 1.000 Pa.s und die Tackwerte liegen zwischen 11 und 19.

Entsprechende Werte ergeben sich für die Farben Schwarz, Rot, Blau, Gelb und Royalblau aus der nachfolgenden Tabelle:

| Farbe | Tack | Viskosität (Pa.s) bei 25 °C | Schichtdicke im gebrannten Zustand |
|---|---|---|---|
| Schwarz | 17,30 | 264,20 | 2,26 |
| Rot | 12,60 | 1.712,00 | 2,09 |
| Blau | 15,90 | 234,30 | 1,82 |
| Gelb | 15,00 | 473,00 | 1,65 |
| Royalblau | 13,70 | 2.834,00 | 1,78 |

Die in der Tabelle angegebenen, heraus schießenden Viskositätswerte für Rot und Royalblau (Königsblau) lassen sich beispielsweise durch ein thixotropes Verhalten der jeweiligen Pigmente erklären. Beim eigentlichen Druckvorgang ist die Viskosität des Druckmediums durch Temperatur und Druck, welche beim Druckprozess anliegen, wesentliche niedriger, d.h. ≤ 1.000 Pa.s (25 °C).

Ein bei dem erfindungsgemäßen Verfahren verwendetes Farbmittel besteht also im Wesentlichen aus zwei Bestandteilen, dem Firnis und einem anorganischen Oxid, respektive einem anorganischen Farbpigment. Der Firnis ist vorzugsweise ein zweikomponentiger Firnis, der oxidativ oder strahlungstrocknend ist. Das anorganische Oxid ist in den Firnis in einem Verhältnis von 30 Gew% bis 60 Gew% eingearbeitet. Verwendet man ein Dispergiermittel, wird dieser im Verhältnis zum Firnis bis zu 2 Gew% zugegeben. Normalerweise ist der Zusatz eines Trocknungsmittels nicht erforderlich. In Ausnahmefällen können jedoch bis zu 1% Trockenstoff bezogen auf Firnis zugegeben werden.

Das erfindungsgemäße Verfahren zeichnet sich durch zwei wesentliche Vorteile aus. Das sind die Erzielbarkeit eines hervorragenden, berechenbaren Farbraums und insbesondere die Schnelligkeit des Verfahrens, das ohne Zwischenschaltung von wesentlichen Trockenschritten nacheinander nass-in-nass Kera-mikschichten auf einen Träger auftragen lässt. Der Siebdruck benötigt beispielsweise, um ein fünffarbiges Dekor zu drucken, mindestens 5 Stunden Druckzeit, der Einfarben-Offsetdruck benötigt für ein fünffarbiges Dekor 2 Tage. Mit dem erfindungsgemäßen Verfahren lassen sich 5 Farben in nur etwa 15 bis 35 Minuten in einem Druckdurchgang bei optimaler Passgenauigkeit (Wiedergabequalität) erzeugen. Das Verfahren reduziert deutlich die Kosten durch eine hohe Einsparung von Personalkosten.

Die.mit einem solchen Mehrfarbendruck erzeugten Motive lassen sich in gewohnter Weise zu keramischen Abziehbildern weiterverarbeiten und als solche zur Dekoration von Porzellan, Keramik, Glas und dergleichen verwenden. Für die automatisierte Applikation von Abziehbildern wird üblicherweise Papier mit Wachsoberfläche eingesetzt. Durch das erfindungsgemäße Verfahren können ohne Veränderung des Farbmittels auch nichtsaugende, nicht-absorbierende, lösemittel- und öldichte Obeflächen wie Wachspapiere, silikonierte oder Silikonpapiere sowie Plastikfolien verdruckt werden.

Mit Hilfe des erfindungsgemäßen Verfahrens ist es auch denkbar bezüglich Form und Widerstand definierte, leitfähige Schichten zu drucken, insbesondere wegen der erzielbaren hohen Auflösung. Das Drucken elektronischer Schaltungen im Massenverfahren ist Voraussetzung für die Bereitstellung kostengünstiger Elektronikbauelemente, welche Schlüsselelemente für verschiedenste Anwendungen sind.

## Patentansprüche

1. Verfahren zur Herstellung keramischer Schichten in einem herkömmlichen Offsetdruckverfahren, **dadurch gekennzeichnet, dass** ohne Zwischenschaltung von Trockenschritten nacheinander in einem einzigen Druckdurchgang wenigstens zwei Keramikschichten basierend auf bei hoher Temperatur kalzinierten anorganischen Oxiden mit einer Korngrößenverteilung D50 im Bereich von 0,8 µm bis 6 µm nass-in-nass unmittelbar auf einem Träger erzeugt werden.

2. Verfahren nach Anspruch 1, **dadurch gekennzeichnet, dass** bei hoher Temperatur kalzinierte anorganische Oxide mit einer Korngrößenverteilung D50 im Bereich von 1 µm bis 3 µm verwendet werden.

3. Verfahren nach einem der Ansprüche 1 oder 2, **dadurch gekennzeichnet, dass** die anorganischen Oxide aus der Gruppe der anorganischen Farbpigmente und/oder Gläser ausgewählt werden.

4. Verfahren nach Anspruch 3, **dadurch gekennzeichnet, dass** jede Keramikschicht aus wenigstens einem anorganischen Oxid erzeugt wird.

5. Verfahren nach Anspruch 3 oder 4, **dadurch gekennzeichnet, dass** mit oder ohne Edelmetall beschichtete feinste Glaskügelchen zur Erzeugung der Keramikschicht eingesetzt werden.

6. Verfahren nach einem der Ansprüche 1 bis 5, **dadurch gekennzeichnet, dass** jede einzelne Keramikschicht nass in einer Dicke aufgetragen wird, dass sie im eingebrannten Zustand in einer dünnen Schicht von 0,5 µm bis 3,5 µm vorliegt.

7. Verfahren nach einem der Ansprüche 1 bis 6, **dadurch gekennzeichnet, dass** die anorganischen Oxide zum Drucken in einem Firnis basierend auf oxidativ trocknenden oder strahlungstrocknenden Polymeren aufgenommen werden.

8. Verfahren nach Anspruch 7, **dadurch gekennzeichnet, dass** das anorganische Oxid in einem Verhältnis von 30 Gew.% bis 60 Gew.% bezogen auf den Firnis verwendet wird.

9. Verfahren nach Anspruch 8, **dadurch gekennzeichnet, dass** ein wenigstens ein- oder zweikomponentiger Firnis verwendet wird.

10. Verfahren nach Anspruch 9, **dadurch gekennzeichnet, dass** ein im Wesentlichen rückstandslos veraschbarer Firnis verwendet wird.

11. Verfahren nach Anspruch 10, **dadurch gekennzeichnet, dass** ein Firnis mit einer Viskosität bei 25°C von 10 bis 18 Pa.s verwendet wird.

12. Verfahren nach Anspruch 11, **dadurch gekennzeichnet, dass** ein Firnis mit einer Viskosität bei 25°C von 15 Pa.s verwendet wird.

13. Verfahren nach einem der Ansprüche 7 bis 12, **dadurch gekennzeichnet, dass** die Mischung anorganisches Oxid in Firnis auf eine Endviskosität von 200 Pa.s bis 1.000 Pa.s eingestellt wird.

14. Verfahren nach Anspruch 13, **dadurch gekennzeichnet, dass** 0,1 bis 2 Gew.% eines Dispergiermittels bezogen auf den Firnis verwendet werden.

15. Verwendung des Verfahrens nach einem der Ansprüche 1 bis 14 zur Herstellung keramischer Abziehbilder.

16. Verwendung des Verfahrens nach einem der Ansprüche 1 bis 14 zur Erzeugung von bezüglich Form und Widerstand definierter, leitfähiger Schichten und leitfähiger Bahnen.

17. Verwendung der nach Anspruch 15 hergestellten Abziehbilder zur Dekoration von Glas-, Keramik-, Porzellan- und Bonechina-Gegenständen.

## Claims

1. Method for the production of ceramic layers in a normal offset printing process, **characterised in that** without any intermediate drying steps at least two ceramic layers are produced wet-in-wet successively in a single printing run directly on a carrier based on inorganic oxides calcinated at high temperature with a grain size distribution D50 in the range of 0.8 µm to 6 µm.

2. Method according to claim 1, **characterised in that** inorganic oxides calcinated at high temperature with a grain size distribution D50 in the range of 1 µm to 3 µm are used.

3. Method according to any of the claims 1 or 2, **characterised in that** the inorganic oxides are selected from the group of the inorganic pigments and/or glasses.

4. Method according to claim 3, **characterised in that** each ceramic layer is generated by at least one inorganic oxide.

5. Method according to claim 3 or 4, **characterised in that** finest glass spherules with or without noble metal coating are used for generating the ceramic layer.

6. Method according to any of the claims 1 to 5, **characterised in that** every single ceramic layer is applied wet in such a thickness that when kilned it has a thin layer of 0.5 µm to 3.5 µm.

7. Method according to any of the claims 1 to 6, **characterised in that** the inorganic oxides for printing are incorporated in a varnish based on oxidatively drying or radiation drying polymers.

8. Method according to claim 7, **characterised in that** the inorganic oxide is used in a ratio of 30 wt.% to 60 wt.% in relation to the varnish.

9. Method according to claim 8, **characterised in that** a varnish of at least one or two components is used.

10. Method according to claim 9, **characterised in that** a varnish is used that can be incinerated essentially residue-free.

11. Method according to claim 10, **characterised in that** a varnish with a viscosity of 10 to 18 Pa.s at 25°C is used.

12. Method according to claim 11, **characterised in that** a varnish with a viscosity of 15 Pa.s at 25°C is used.

13. Method according to any of the claims 7 to 12, **characterised in that** the mix of inorganic oxide in varnish is adjusted to a final viscosity of 200 Pa.s to 1,000 Pa.s.

14. Method according to claim 13, **characterised in that** 0.1 to 2 wt-% of a dispersant in relation to the varnish is used.

15. Use of the method according to anyone of claims 1 to 14 for producing ceramic decals.

16. Use of the method according to anyone of claims 1 to 14 for producing conductive layers and conductive paths defined with regard to shape and resistance.

17. Use of the decals produced according to claim 15 for the decoration of glass, ceramic, porcelain and bone china objects.

## Revendications

1. Procédé de fabrication de couches céramiques selon un procédé d'imprimerie traditionnel en offset, **caractérisé en ce que** deux couches céramiques au moins sont produites l'une après l'autre en humide sur humide directement sur un support en un seul phase d'impression sans étapes de séchage intermédiaires à partir d'oxydes inorganiques calcinés à haute température possédant une granulométrie D50 comprise entre 0,8 µm et 6 µm.

2. Procédé selon la revendication 1, **caractérisé en ce que** l'on utilise des oxydes inorganiques calcinés à haute température possédant une granulométrie D50 comprise entre 1 µm et 3 µm.

3. Procédé selon l'une quelconque des revendications 1 ou 2, **caractérisé en ce que** les oxydes inorganiques sont choisis parmi les pigments colorés et/ou les verres inorganiques.

4. Procédé selon la revendication 3, **caractérisé en ce que** chaque couche céramique est fabriquée à partir d'un oxyde inorganique au moins.

5. Procédé selon l'une des revendications 3 ou 4, **caractérisé en ce que** des billes de verre extrêmement fines revêtues ou non de métal précieux sont utilisées pour fabriquer la couche céramique.

6. Procédé selon l'une quelconque des revendications 1 à 5,
**caractérisé en ce que** chaque couche céramique individuelle est appliquée humide sur une épaisseur telle qu'à l'état cuit elle forme une couche fine de 0,5 µm à 3,5 µm.

7. Procédé selon l'une quelconque des revendications 1 à 6, **caractérisé en ce que** les oxydes inorganiques sont intégrés pour l'impression à un vernis se basant sur des polymères asséchants par oxydation ou asséchants par irradiation.

8. Procédé selon la revendication 7, **caractérisé en ce que** l'oxyde inorganique est utilisé dans une proportion de 30% à 60% de la masse par rapport au vernis.

9. Procédé selon la revendication 8, **caractérisé en ce qu'**un vernis contenant au moins un ou deux composants est utilisé.

10. Procédé selon la revendication 9, **caractérisé en ce qu'**un vernis se consumant essentiellement sans résidus est utilisé.

11. Procédé selon la revendication 10, **caractérisé en ce qu'**un vernis d'une viscosité de 10 à 18 Pa.s à 25°C est utilisé.

12. Procédé selon la revendication 11, **caractérisé en ce qu'**un vernis d'une viscosité de 15 Pa.s à 25°C est utilisé.

13. Procédé selon l'une quelconque des revendications 7 à 12, **caractérisé en ce que** le mélange d'oxyde inorganique avec le vernis est ajusté à une viscosité finale de 200 Pa.s à 1.000 Pa.s.

14. Procédé selon la revendication 13, **caractérisé en ce qu'**un défloculant est utilisé dans une proportion de 0,1 à 2% de la masse par rapport au vernis.

15. Application du procédé selon l'une quelconque des revendications 1 à 14 à la fabrication d'autocollants céramiques.

16. Application du procédé selon l'une quelconque des revendications 1 à 14 à la fabrication de couches conductrices et de voies conductrices de forme et de résistance définies.

17. Utilisation des autocollants fabriqués conformément à la revendication 15 pour la décoration d'objets en verre, en céramique, en porcelaine et en porcelaine anglaise tendre.
